# EUROPEAN PATENT SPECIFICATION

(11) **EP 4 070 971 B1**
(45) Date of publication and mention of the grant of the patent: **29.11.2023**
(21) Application number: 22175938.4
(22) Date of filing: 26.06.2019
(51) Int. Cl.: B60C 11/03, B60C 11/16, B60C 11/12

(54) **STUDDED TYRE FOR VEHICLE WHEELS**
SPIKEREIFEN FÜR FAHRZEUGRÄDER
PNEU À CRAMPONS POUR ROUES DE VÉHICULE

(30) Priority: 13.07.2018 IT 201800007199
(43) Date of publication of application: 12.10.2022
(62) Divisional of application: 19756245.7
(73) Proprietor: Pirelli Tyre S.p.A., 20126 Milano (IT)
(72) Inventor: DUPRE', Giulio Lorenzo, I-20126 MILANO (IT); CASAROTTO, Giovanni, I-20126 MILANO (IT); SPEZIARI, Diego Ettore, I-20126 MILANO (IT); BOLZONI, Roberto, I-20126 MILANO (IT)
(74) Representative: Susanetto, Carlo

(56) References cited:
- EP-A1- 2 285 600
- EP-A1- 2 501 562
- EP-A1- 2 955 037
- EP-A1- 3 031 628
- JP-A- S6 294 402

## Description

The present invention relates to a studded tyre for vehicle wheels.

A tyre generally comprises a carcass structure shaped toroidally about an axis of rotation and including at least one carcass ply having end strips engaged in respective annular anchoring structures, known as bead cores.

In a position radially external to the carcass structure, a belt structure is provided comprising, in the case of car tyres, at least two radially superposed strips of rubberised fabric provided with reinforcing cords, usually metal, arranged mutually parallel in each strip but crossed with the cords of the adjacent strip, preferably symmetrically about the equatorial plane of the tyre.

Preferably, the belt structure further comprises, in a radially external position, at least on the ends of the underlying belt strips, another, third layer of textile or metal cords, arranged circumferentially (at 0 degrees). In tubeless tyres, a radially internal layer, called a "liner", is further present, and has features of impermeability to ensure air-tightness at the tyre itself.

In a positon radially external to the belt structure, a tread band made of elastomeric material is applied, on which a tread surface intended for contact with the road surface is defined.

To guarantee suitable road-holding on a wet road surface, tyres have a tread band provided with grooves of various shapes and geometries which delimit portions of tread band intended for contact with the ground, known as blocks.

The main function of the grooves is to make it possible to evacuate water present between the surface of the tyre and the road surface at the moment of mutual contact, preventing the hydrostatic pressure which results from the impact of the water against the travelling tyre from being able to cause even partial lifting of the tyre from the road surface with a resulting loss of control of the vehicle.

The overall configuration of the tread band defined by the set of grooves and blocks forms the tread pattern.

This is typically formed by repetition, in continuous succession along the entire circumferential extent of the tread band, of the same base module.

In winter tyres, small notches known as "sipes", extending from the tread surface of the tyre towards the inside of the block, are further formed on the blocks of the tread band. The function of the sipes is to offer further grip elements in the case of travel on snowy ground and to retain some amount of snow, thus improving the adherence to the road surface.

Further, in some winter tyres, studs are arranged on the tread band and, as a result of a portion (pin) thereof projecting from the tread surface, improve the grip features of the tyre on the icy road surface.

Examples of studded tyres according to the prior art are disclosed in EP 2955037, in EP2285600, in EP2501562 and in JP S6294402.

The Applicant has observed that during the travel of a studded tyre on an icy road surface, the stud may bring about an action of eroding the ice, with resulting production of powdered ice.

In particular, the Applicant observed that the powdered ice tends to accumulate in the immediate vicinity of the stud, and this, however, reduces the projecting stud portion capable of striking the road surface.

In fact, the projecting stud portion of the tread surface may be, in part or in whole, embedded in the powdered ice accumulated around the stud.

This situation would make the grip action of the stud on the road surface less effective, and is therefore undesirable.

Above mentioned prior art document EP 2955037 also discloses a studded tyre with studs on the tread surface, wherein recesses portions are provided around the stud to collect powdered ice in order to improve traction of such a tyre during winter conditions.

Naturally, the action of eroding the icy road surface and of the resulting production of powdered ice is more accentuated when the tyre is skidding on the road surface, as may occur in the case of abrupt acceleration, abrupt braking, or rapid steering. The Applicant observed how solutions are known which provide forming around the stud a recess capable of collecting some amount of powdered ice, with the intent of limiting the effects of the accumulation of powdered ice around the stud.

However, the Applicant found that the provision of these recesses could be insufficient by itself to solve this problem, and noticed that it was necessary not only to form zones around the stud in which to accumulate the powdered ice, but also to provide expulsion of the powdered ice once it is accumulated, so as to free up space for any powdered ice subsequently eroded by the stud.

The Applicant thus found that a studded tyre in which a recess shaped with a first and a second portion interconnected by a connection portion having a restricted section is formed around the stud deforms substantially during the phases of entering and exiting the footprint area at the connection portion, producing a contraction and expansion movement of the recess which promotes the expulsion of the powdered ice which may have accumulated in the recess.

In particular, in a first aspect thereof, the invention relates to a studded tyre for vehicle wheels according to claim 1.

In this way, the first recess has a wider first and second portion, advantageously intended to receive any powdered ice eroded by the stud, which are interconnected by a connection portion, having a restricted section, which defines a bottleneck in the first recess.

As a result of this peculiar shaping, when the first recess enters the footprint area and is thus subjected to the pressure of the weight of the vehicle, it is substantially deformed precisely at the connection portion, where the reduced width is present, whilst the first and second portion remain open so as to make it possible to collect any powdered ice eroded by the stud during the contact thereof with the icy road surface.

Upon exiting the footprint area, the first recess is unloaded of the pressure of the vehicle and returns resiliently to the original configuration thereof. This sudden variation in shape of the recess brings about a pulse which tends to expel the powdered ice which may be present in the first recess.

This advantageously makes it possible to prevent or at least to reduce the accumulation of powdered ice, which, over time, would tend to cover the projecting portion of the stud, limiting the effectiveness thereof.

Moreover, according to this configuration the second portion is capable of collecting more powdered ice than the rest of the first recess. Indeed, the Applicant has observed that the majority of the powdered ice eroded by the stud is driven towards the second portion.

The studs may thus maintain a greater grip efficiency during travel on an icy surface and give the studded tyre better road-holding performance both in traction phases (whether in acceleration or in braking) and during turning.

Further, as a result of the presence of a portion having restricted section, the first recess takes on an aesthetically pleasing configuration which highlights the presence of the studs on the tread band, increasing the visibility and recognisability of the tyre.

The term "equatorial plane" of the tyre is intended to mean a plane perpendicular to the axis of rotation of the tyre and subdividing the tyre into two equal parts.

The "circumferential" direction is intended to mean a direction generally pointing along the direction of rotation of the tyre or at most slightly inclined (at most by approximately 5°) with respect to the direction of rotation of the tyre.

The "axial" direction is intended to mean a direction substantially parallel to the axis of rotation of the tyre or at most slightly inclined (at most by approximately 5°) with respect to this axis of rotation of the tyre. The axial direction is generally perpendicular to the circumferential direction.

The "tread surface" is intended to mean the surface portion radially external to the tread band intended to come into contact with the road surface when the tyre is set rolling.

The term "effective width", in reference to the tread band, is intended to mean the width of the radially outermost portion of the tread band (from edge to edge) intended for contact with the ground.

The term "groove" is intended to mean a notch formed in a tread band portion having a width greater than or equal to 1.5 mm and preferably a depth greater than 3 mm.

A groove is referred to as "circumferential" if it extends in a circumferential direction or at most is inclined by an angle less than 5° with respect to the circumferential direction.

A groove is referred to as "transverse" if it extends in a direction inclined with respect to the circumferential direction by an acute angle greater than at least 10°. A "block" is intended to mean a portion of tread band delimited by grooves or by a lateral edge of the tread band, the radially external surface of which is intended for contact with the road surface when the tyre is set rolling.

A "sipe" means a notch formed on a tread band portion having a width less than 1.5 mm, preferably less than or equal to 1 mm.

A "recess" is a notch formed on a block having a depth less than 3 mm and preferably a width between 0.5 mm and 5 mm.

The "width" of a groove, a sipe, a recess or a portion thereof means the dimension parallel to the tread surface and perpendicular to the prevailing longitudinal extension of the groove, sipe, recess or portion thereof.

The width of sipes and grooves is understood to be measured at a depth greater than or equal to 1 mm, preferably greater than or equal to 1.5 mm.

The width of a recess or a portion thereof is understood to be measured at a depth equal to approximately half the total depth of the recess or of the portion thereof. If the width of the groove or sipe varies along the longitudinal progression thereof, the mean width is considered, the value of which is obtained as the mean of the different width values suitably weighted as a function of the relative longitudinal extensions. For example, if a groove has a width of 5 mm for 80% of the longitudinal extension thereof and a width of 3 mm for the remaining 20%, the mean value of the width to be considered will be 5 × 0.8 + 3 × 0.2 = 4.6 mm.

A recess formed on a block is "closed" if the contour thereof remains confined to the radially external surface of the block, or in other words if it is not open to a flank of the block.

The "tread pattern" is intended to mean the overall configuration of the tread band as defined by the set of grooves and blocks delimited by said grooves.

The "footprint area" is intended to mean the tread band portion instantaneously in contact with the road surface during the rotation of the tyre. In real conditions, the footprint area is a function of various parameters, including the inflation pressure of the tyre, the load to which it is subjected, the road surface and the driving conditions, for which reference values may however be defined.

The present invention, in at least one of the aforementioned aspects, may have at least one of the further preferred features set out hereinafter.

Preferably, said first portion extends from a first end of said first recess up to said connection portion.

Preferably, said second portion extends from a second end of said recess, longitudinally opposite said first end, to said connection portion.

Preferably, the width of said connection portion has a width which decreases progressively from said first portion to a minimum value and then increases progressively up to said second portion.

Preferably, said minimum value is between 1 and 1.5 mm.

Preferably, said first recess is separated from said stud by a shoulder which extends continuously around said stud.

In this way, the recess remains clearly isolated from the stud, in such a way that the powdered ice accumulated in the first recess does not have the possibility of moving towards the stud, which thus remains free of accumulations.

Preferably, said shoulder is substantially coplanar with a radially external surface of said block.

In this way, the shoulder has the maximum possible height without projecting from the tread surface.

Preferably, said shoulder separates said first recess from a seat for receiving said stud.

In this way, the zone intended for collecting the powdered ice is structurally distinct from the zone intended for receiving the stud.

This seat is preferably configured in accordance with the profile of the stud and, in particular, it has a radially internal portion, embedded in the block and intended to receive a base of the stud, and a radially external portion intended to receive a head of the stud.

Preferably, the radially external portion of the seat has a surface shaping analogous to the section of the head of the stud and a depth slightly greater than the height of the head of the stud, typically of approximately 0.2 - 0.4 mm.

In this way, when the stud is received in the seat, the head of the stud is slightly lowered with respect to the tread surface, or, given any dimensional tolerances in the manufacturing phase of the studded tyre, at most coplanar with the tread surface.

In this way, the head of the stud is prevented from touching the road surface during the rolling of the tyre, this situation being extremely undesirable since it would involve greater wear on the road surface as well as a higher probability of losing the stud.

On the other hand, it is also undesirable for the head of the stud to be excessively lowered with respect to the tread surface, since the stud portion projecting from the tread surface would be reduced, possibly to nothing.

For these reasons too, the seat for receiving the stud is thus unsuitable for containing powdered ice.

Moreover, since the head of the stud is made of metal material, the powdered ice will slip on the surface thereof differently from a recess having a rubber base provided for receiving the ice.

Preferably, said first recess is delimited by an internal edge, which is closer to said stud, and by an external edge, which is more remote from said stud, and said internal edge is spaced apart from said stud by at least 1 mm.

Preferably, said internal edge is spaced apart from said stud by a distance between 1 and 2 mm.

Preferably, said external edge is spaced apart from said stud by a distance between 3 and 5 mm.

In this way, the zone for collecting the powdered ice remains sufficiently spaced apart from the stud to prevent the powder from accumulating directly thereon and, at the same time, sufficiently close to collect as much powdered ice as possible.

Preferably, there is defined on said tyre a preferred rolling direction and, with respect to said preferred rolling direction, said first portion is downstream of said stud.

More preferably, with respect to said preferred rolling direction, said connection portion is also downstream of said stud.

The first portion and the connection portion are thus positioned in front of the stud during the rolling of the tyre in the normal direction of travel, whilst the second portion, meanwhile, preferably extends to the side of and behind the stud.

Preferably, said second volume is at least double said first volume, more preferably approximately four times said first volume.

Preferably, said first volume is between 3 and 7 mm³, and is more preferably approximately 5 mm³.

Preferably, said second volume is between 15 and 25 mm³, and is more preferably approximately 20 mm³.

Preferably, said connection portion has a volume analogous to said first volume, equal to approximately 5 mm³.

Preferably, said first width of said first portion is between 1.5 and 3 mm.

Preferably, said second width of said second portion is between 1.5 and 4 mm.

Preferably, said collection portion has a width of between 0.5 and 2 mm.

Preferably, said first recess has a depth of between 0.8 and 2 mm, more preferably of approximately 1 mm.

Preferably, said first recess has a closed contour.

The first recess is thus a closed recess, in other words is not open to a flank of the block.

Preferably, there is formed in said block a second recess which is substantially identical to said first recess and which extends so as to partially surround said stud at the opposite side to said first recess.

Preferably, said second recess is arranged in a symmetrical manner relative to said first recess with respect to a circumferential direction which extends through the centre of said stud.

In this way, the powdered ice can be collected on both sides of the stud.

Preferably, said first recess and said second recess are mutually spaced apart, at the respective first portions, by a minimum extent between 1 and 2 mm.

Preferably, said first recess and said second recess are mutually spaced apart, at the respective second portions, by a minimum extent of between 3 and 5 mm.

In this way, in front of and behind the stud, there remain defined respective block areas which are not affected by the first or the second recess, in such a way that the stud can be more resistant to the tangential stresses in the circumferential direction, in particular in the event of abrupt acceleration and braking.

Preferably, on said block around the stud there is defined a clearance area, including said first recess, in which no sipes are formed.

More preferably, it extends beyond said first recess by approximately 3 mm.

Preferably, said clearance area has a diameter of approximately 15 - 20 mm, centred on the stud.

The features and advantages of the invention will be more clearly apparent from the detailed description of a preferred embodiment thereof, illustrated by way of non-limiting example with reference to the accompanying drawings, in which:

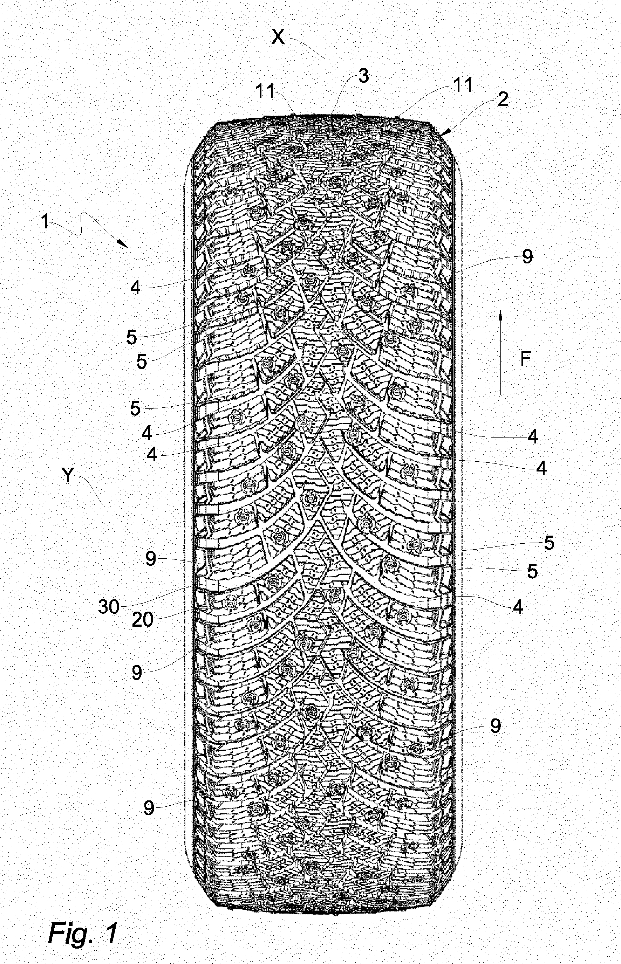

- Fig. 1 is a front perspective view of an example of studded tyre for vehicle wheels realised in accordance with the present invention;

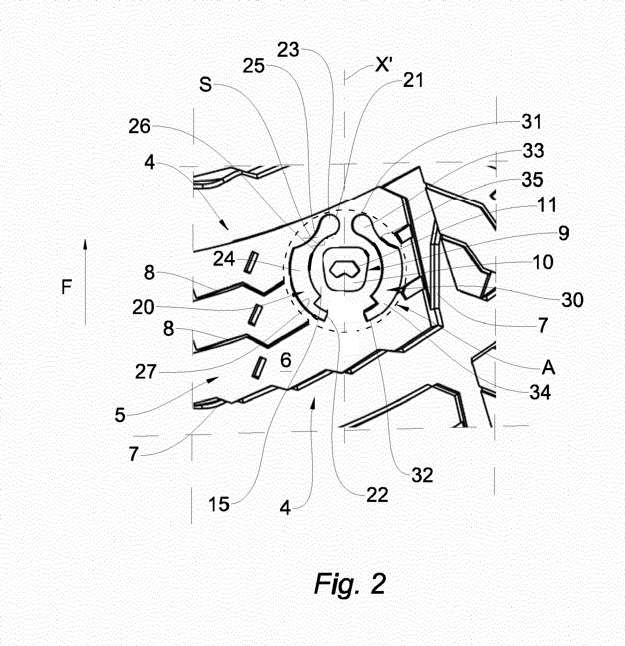

- Fig. 2 is a schematic view on an enlarged scale of a studded block of the tyre of Fig. 1, and
- Fig. 3 is a view of the block of Fig. 2 freed of the stud.

Referring to the appended drawings, 1 denotes as a whole a studded tyre for vehicle wheels realised in accordance with the present invention.

The studded tyre 1 comprises a tyre structure which is conventional per se, not shown in the appended drawings, as well as a tread band 2 on which there is defined a tread surface 3 which is arranged in a position radially external to the tread band 2 and intended for contact with a road surface.

The tyre 1 has a conventional general toroidal shape formed about an axis of rotation, defining on the tread surface 3 an axial direction Y parallel thereto and passed through by an equatorial plane X, perpendicular to the axis of rotation and defining on the tread band 3 a circumferential direction parallel thereto.

The studded tyre 1 has a nominal section width of approximately 205 mm with a rim diameter of 16 inches.

The tyre 1 is a directional tyre, in which a preferred rolling direction of the tyre is defined, indicated in the drawings by the arrow F.

On the tread band 2 there are formed a plurality of grooves, all denoted 4, which delimit at least in part a plurality of blocks 5.

Each block 5 has an external surface 6, belonging to the tread surface 3, from the perimeter edge of which respective flanks 7 extend.

Preferably, on the blocks 5 there are formed a plurality of sipes 8 and, on at least one of said blocks, a plurality of studs 9, made of metal material.

Each stud 9 comprises a base, embedded in the interior of the tread band 2, a head 10 which is radially external with respect to the base, and a grip appendage (pin) 11, extending radially from the head 10.

The stud 9 is received in a seat 12 formed on the tread band 2 and having the configuration of the stud 9. The seat 12 comprises a radially internal portion 13, embedded in the block and intended to receive the base of the stud, and a radially external portion 14, intended to receive the head 10 of the stud.

In particular, the radially external portion 14 of the seat 12 has the shape of the head 10 of the stud and a depth of the external surface 6 slightly greater (for example by approximately 0.3 mm) than the height of the head 10. In this way, the head 10 of the stud is in a slightly lowered or at least coplanar position with respect to the tread surface 3, whilst the grip appendage 11 forms the stud portion radially projecting from the tread surface 3 and intended to strike the icy road surface.

In the preferred example described here, the head 10 of the stud 9 has a general trapezoid shape, with the larger base facing towards the rolling direction F.

Around each stud 9 there is provided on the block 5 a substantially circular clearance area A, centred on the stud 9, of a diameter of approximately 18 mm, in which any sipes 8 are interrupted.

On the block 5, within the clearance area A, there are further provided a first and a second recess, respectively denoted 20 and 30, extending so as to partially surround the stud 9 and intended to collect powdered ice which may be eroded by the stud 9 when in contact with the icy road surface.

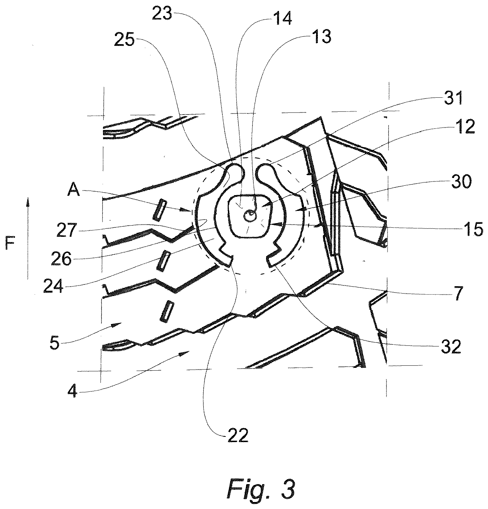

The first and the second recess are substantially mutually identical and are arranged on one side and on the other side of the stud 9 in a symmetrical manner with respect to a circumferential direction extending through the centre of the stud 9, denoted X' in Fig. 3 for clarity.

Therefore, the following detailed description of the first recess 20 is also applicable analogously to the second recess 30.

The first recess 20 is a closed recess, the contour of which is confined to the interior of the clearance area A of the block 5, and is separated from the stud 9 by a shoulder 15, coplanar with the external surface 6 of the block 5 and extending continuously around the seat 12 in which the stud 9 is received.

In particular the first and the second recess 20, 30 are formed in an annular band centred on the stud 9 and having an internal diameter of approximately 9 mm and an external diameter of approximately 14 mm.

The first recess 20 has an overall curvilinear shaping extending between a first end 21, positioned downstream of the stud 9 (in other words in front of the stud 9) with respect to the preferred rolling direction F, and a second end 22 longitudinally opposite the first end 21 and positioned upstream of the stud 9 (in other words behind the stud) with respect to the preferred rolling direction F.

The first recess 20 comprises a first portion 23, extending from the first end 21, a second portion 24, extending from the second end 22, and a connection portion 25 which is interposed between the first and the second portions 23 and 24.

The shoulder 15 is 1 to 2 mm wide and defines an internal edge 26 of the first recess 20, while on the side more remote from the seat 12 the first recess 20 is delimited by an external edge 27.

The first portion 23 is positioned in front of the stud 9 and has an overall circular shape elongated towards the connection portion 25, having a first width of approximately 2.5 mm.

The second portion 24 has a shape which is elongated to the side and to the rear of the stud 9 and has a second width of approximately 2.5 mm. This second width remains substantially constant for a predominant part of the second portion 24 and is reduced at the second end 22.

The connection portion 25 has a width which decreases progressively from said first portion 23 to a minimum value 5 and then increases progressively up to said second portion 24. The connection portion 25 thus defines a bottleneck in the first recess 20.

In particular, at the connection portion 25, the external edge 27 forms a circumference arc, convex towards the first recess, of a curvature of approximately 4.5 mm.

Further, the minimum value S of the width of the connection portion is approximately 1.2 mm, corresponding to approximately half of the first and second widths.

The first recess 20 has a substantially constant depth of approximately 1 mm, in such a way that the first portion 23 has a first volume of approximately 5 mm³, the second portion 24 has a second volume of approximately 20 mm³, and the connection portion 25 has a volume of approximately 5 mm³.

As stated above, the second recess 30 is identical to the first recess 20, meaning that it also comprises a first portion 33, a second portion 34 between which a connection portion 35 is interposed, completely analogous to the first portion 23, the second portion 24 and the connection portion 25 respectively of the first recess 20.

The first and the second recess 20, 30 are mutually separated and mutually spaced apart by approximately 1.5 mm at the respective first ends 21 and 31 and by approximately 4 mm at the respective second ends 22 and 32.

During the rolling of the tyre 1, the stud 9 comes into contact with the road surface at the grip appendage (pin) 11 thereof and erodes a little ice from the surface. The amount of powdered ice eroded by the stud 9 naturally depends on the movement of the tyre with respect to the road surface.

The first and the second recess 20 and 30 enter the footprint area first with respective first portions 23 and 33, then with the connection portions 25 and 35, and finally with the second portions 24 and 34.

The ice eroded from the stud 9 is moved to the side of the stud itself and is collected in the first and the second recess 20, 30, in particular in the first portions 23 and 33 and above all in the respective second portions 24 and 34.

The first and the second recess 20, 30, when in the footprint area, deform under the weight of the vehicle, and in particular the associated connection portion 25, 35 shrinks further until it possibly also closes.

When the first and the second recess 20, 30 exit the footprint area, the respective connection portions 25 and 35, no longer subjected to the pressure exerted by the weight of the vehicle, expand, taking on the original shape thereof again. Partly as a result of the resilient properties of the elastomeric material of the tread band 2, the return of the connection portions 25, 35 to the original shape is very sudden, so as to bring about a shock in the whole of the first and second recess which also promotes the expulsion of the powdered ice from the respective first and second portions 23, 24 and 33, 34.

In this way, the first and the second recess 20 and 30 will contain little powdered ice when they re-enter the footprint area on the next turn of the tyre.

The present invention thus solves the problem complained of above with reference to the cited prior art, while simultaneously offering numerous other advantages, including the fact of making the studded tyre 1 aesthetically noteworthy and recognisable, in particular at the studs 9, which are highlighted by the particular shaping of the recesses 20 and 30.

Naturally, for the purpose of meeting specifications and incidental application requirements, a person skilled in the art will be able to bring further modifications and variants to the above-described invention whilst remaining within the scope of protection as defined by the following claims.

## Claims

1. Studded tyre comprising a tread band (2), on which there are formed respective pluralities of grooves (4) and blocks (5), and a plurality of studs (9) which are provided on at least some of said blocks, wherein on at least one of said blocks on which a stud is provided, there is provided a first recess (20) which is intended to receive powdered ice and which is separated from said stud (9) and which extends on said block so as to at least partially surround said stud, and wherein said first recess (20) comprises:
- a first portion (23) having a first width,
- a second portion (24) having a second width, and
- a connection portion (25) which is interposed between said first portion (23) and said second portion (24) and which has a width less than said first width and said second width;
wherein said first portion (23) has a first volume and said second portion (24) has a second volume which is greater than said first volume.

2. Tyre according to claim 1, wherein said first recess (20) is separated from said stud by a shoulder (15) which extends continuously around said stud.

3. Tyre according to claim 2, wherein said shoulder (15) is substantially coplanar with a radially external surface (6) of said block.

4. Tyre according to claim 2 or claim 3, wherein said shoulder (15) separates said first recess (20) from a seat (12) for receiving said stud.

5. Tyre according to any one of the preceding claims, wherein said first recess (20) is delimited by an internal edge (26), which is closer to said stud, and by an external edge (27), which is more remote from said stud, and said internal edge (26) is spaced apart from said stud (9) by at least 1 mm.

6. Tyre according to any one of the preceding claims, wherein said connection portion (25) has a width between 0.5 and 2 mm.

7. Tyre according to any one of the preceding claims, wherein said second volume is at least double said first volume.

8. Tyre according to any one of the preceding claims, wherein said first recess (20) has a depth between 0.8 and 2 mm.

9. Tyre according to any one of the preceding claims, wherein there is defined on said tyre a preferred rolling direction (F) and, with respect to said preferred rolling direction, said first portion (23) is downstream of said stud (9).

10. Tyre according to claim 9, wherein, with respect to said preferred rolling direction (F), said connection portion (25) is also downstream of said stud (9).

11. Tyre according to any one of the preceding claims, wherein there is formed in said block a second recess (30) which is substantially identical to said first recess (20) and which extends so as to partially surround said stud (9) at the opposite side to said first recess (20).

12. Tyre according to claim 11, wherein said second recess (30) is arranged in a symmetrical manner relative to said first recess (20) with respect to a circumferential direction which extends through the centre of said stud (9).

## Patentansprüche

1. Spikereifen, umfassend ein Laufflächenband (2), auf dem jeweilige Mehrzahlen von Rillen (4) und Blöcken (5) ausgebildet sind, und eine Mehrzahl von Spikes (9), die auf zumindest einigen der Blöcke vorgesehen ist, wobei auf mindestens einem der Blöcke, auf denen ein Spike vorgesehen ist, eine erste Vertiefung (20) vorgesehen ist, die zur Aufnahme von Eispulver bestimmt und die vom Spike (9) getrennt ist und die sich auf dem Block so erstreckt, dass sie den Spike zumindest teilweise umgibt, und wobei die Vertiefung (20) umfasst:
- einen ersten Abschnitt (23) mit einer ersten Breite,
- einen zweiten Abschnitt (24) mit einer zweiten Breite, und
- einen Verbindungsabschnitt (25), der zwischen dem ersten Abschnitt (23) und dem zweiten Abschnitt (24) eingefügt ist und der eine Breite aufweist, die kleiner als die erste Breite und die zweite Breite ist;
wobei der erste Abschnitt (23) ein erstes Volumen aufweist und der zweite Abschnitt (24) ein zweites Volumen aufweist, das größer als das erste Volumen ist.

2. Reifen nach Anspruch 1, wobei die erste Vertiefung (20) vom Spike durch eine Schulter (15) getrennt ist, die sich durchgehend um den Spike erstreckt.

3. Reifen nach Anspruch 2, wobei die Schulter (15) im Wesentlichen koplanar mit einer radial äußeren Fläche (6) des Blocks ist.

4. Reifen nach Anspruch 2 oder 3, wobei die Schulter (15) die erste Vertiefung (20) von einem Sitz (12) zur Aufnahme des Spikes trennt.

5. Reifen nach einem der vorhergehenden Ansprüche, wobei die erste Vertiefung (20) begrenzt ist durch eine Innenkante (26), die näher zum Spike ist, und eine Außenkante (27), die weiter entfernt vom Spike ist, wobei die Innenkante (26) in einem Abstand von mindestens 1 mm vom Spike (9) angeordnet ist.

6. Reifen nach einem der vorhergehenden Ansprüche, wobei der Verbindungsabschnitt (25) eine Breite von 0,5 bis 2 mm aufweist.

7. Reifen nach einem der vorhergehenden Ansprüche, wobei das zweite Volumen mindestens das Zweifache des ersten Volumens beträgt.

8. Reifen nach einem der vorhergehenden Ansprüche, wobei die erste Vertiefung (20) eine Tiefe von 0,8 bis 2 mm aufweist.

9. Reifen nach einem der vorhergehenden Ansprüche, wobei auf dem Reifen eine bevorzugte Rollrichtung (F) definiert ist und der erste Abschnitt (23) sich in Bezug auf die bevorzugte Rollrichtung stromabwärts des Spikes (9) befindet.

10. Reifen nach Anspruch 9, wobei der Verbindungsabschnitt (25) sich in Bezug auf die bevorzugte Rollrichtung ebenfalls stromabwärts des Spikes (9) befindet.

11. Reifen nach einem der vorhergehenden Ansprüche, wobei im Block eine zweite Vertiefung (30) ausgebildet ist, die im Wesentlichen identisch mit der ersten Vertiefung (20) ist und die sich so erstreckt, dass sie den Spike (9) auf der gegenüberliegenden Seite der ersten Vertiefung (20) teilweise umgibt.

12. Reifen nach Anspruch 11, wobei die zweite Vertiefung symmetrisch relativ zur ersten Vertiefung (20) in Bezug auf eine Umfangsrichtung angeordnet ist, die durch die Mitte des Spike (9) verläuft.

## Revendications

1. Pneu à crampons comprenant une bande de roulement (2), sur laquelle sont formées des pluralités respectives de rainures (4) et de pavés (5), et une pluralité de crampons (9) qui sont prévus sur au moins certains desdits pavés, dans lequel sur au moins l'un desdits pavés sur lequel un crampon est prévu, un premier évidement (20) est prévu, qui est destiné à recevoir de la glace en poudre et qui est séparé dudit crampon (9) et qui s'étend sur ledit pavé de manière à entourer au moins partiellement ledit crampon, et dans lequel ledit premier évidement (20) comprend :
- une première partie (23) ayant une première largeur,
- une deuxième partie (24) ayant une deuxième largeur, et
- une partie de liaison (25) qui est interposée entre ladite première partie (23) et ladite deuxième partie (24) et qui a une largeur inférieure à ladite première largeur et à ladite deuxième largeur ;
dans lequel ladite première partie (23) a un premier volume et ladite deuxième partie (24) a un deuxième volume qui est supérieur audit premier volume.

2. Pneu selon la revendication 1, dans lequel ledit premier évidement (20) est séparé dudit crampon par un épaulement (15) qui s'étend de façon continue autour dudit crampon.

3. Pneu selon la revendication 2, dans lequel ledit épaulement (15) est sensiblement coplanaire avec une surface radialement externe (6) dudit pavé.

4. Pneu selon la revendication 2 ou 3, dans lequel ledit épaulement (15) sépare ledit premier évidement (20) d'un siège (12) de réception dudit crampon.

5. Pneu selon l'une quelconque des revendications précédentes, dans lequel ledit premier évidement (20) est délimité par un bord interne (26), qui est plus proche dudit crampon, et par un bord externe (27), qui est plus éloigné dudit crampon, et ledit bord interne (26) est espacé dudit crampon (9) d'au moins 1 mm.

6. Pneu selon l'une quelconque des revendications précédentes, dans lequel ladite partie de liaison (25) a une largeur comprise entre 0,5 et 2 mm.

7. Pneu selon l'une quelconque des revendications précédentes, dans lequel ledit deuxième volume est au moins le double dudit premier volume.

8. Pneu selon l'une quelconque des revendications précédentes, dans lequel ledit premier évidement (20) a une profondeur comprise entre 0,8 et 2 mm.

9. Pneu selon l'une quelconque des revendications précédentes, dans lequel une direction de roulement préférée (F) est définie sur ledit pneu et, par rapport à ladite direction de roulement préférée, ladite première partie (23) est en aval dudit crampon (9).

10. Pneu selon la revendication 9, dans lequel, par rapport à ladite direction de roulement préférée (F), ladite partie de liaison (25) est également en aval dudit crampon (9).

11. Pneu selon l'une quelconque des revendications précédentes, dans lequel un deuxième évidement (30) est formé dans ledit pavé, qui est sensiblement identique audit premier évidement (20) et qui s'étend de manière à entourer partiellement ledit crampon (9) au niveau du côté opposé audit premier évidement (20).

12. Pneu selon la revendication 11, dans lequel ledit deuxième évidement (30) est agencé de manière symétrique par rapport audit premier évidement (20) par rapport à une direction circonférentielle qui s'étend à travers le centre dudit crampon (9).
